# FASCICULE DE BREVET EUROPEEN

(11) **EP 1 222 845 B1**
(45) Date de publication et mention de la délivrance du brevet: **08.04.2009**
(21) Numéro de dépôt: 01400092.1
(22) Date de dépôt: 12.01.2001
(51) Int. Cl.: A01C 11/02

(54) **Procédé pour séparer des mottes cubiques, dispositif pour la mise en oeuvre du procédé et machine de plantation de plantes en mottes comportant un tel dispositf**
Verfahren zum Trennen eckiger Setzlinge, Gerät zum Ausführen des Verfahrens und Pflanzmaschine mit einem solchen Gerät zum Pflanzen von Setzlingen
Method for separating seedling blocks, device for implementing said method and planting machine comprising such a device

(43) Date de publication de la demande: 17.07.2002
(73) Titulaire: Regero, 44334 Nantes Cedex 03 (FR)
(72) Inventeur: Pinson, Dominique, 44000 Nantes (FR)
(74) Mandataire: Michelet, Alain

(56) Documents cités:
- EP-A- 0 475 839
- EP-A- 0 550 821
- EP-A- 0 596 841

## Description

La présente invention concerne, dans le domaine des cultures maraîchères, un procédé selon le préambule de la revendication 1, pour séparer des mottes cubiques qui sont regroupées sous forme de blocs linéaires constitués de plusieurs mottes, cinq ou dix généralement.

L'invention concerne également le dispositif selon le préambule de la revendication 3 pour la mise en oeuvre du procédé ainsi que la machine de plantation qui comprend un tel dispositif.

Ces machines de plantation de mottes cubiques comprennent au moins un couloir dans lequel un opérateur dispose les mottes ou plutôt les groupes de mottes qu'il prélève dans un plateau qui comporte au moins une centaine de plants. Une telle machine est décrit par exemple dans le document EP-A-0 550 821.

Dans ce couloir, les mottes sont en fait disposées sur un tapis sans fin qui pousse lesdites mottes contre une butée de retenue. Les mottes sont ensuite prises à l'extrémité du couloir, une par une, pour être mises en terre par un système approprié, généralement une batterie de pinces rayonnantes dont la vitesse périphérique au moment de la dépose sur le sol est nulle par rapport à ce dernier, pour une certaine plage de pas de plantation.

Les mottes sont constituées d'un substrat approprié du genre terreau, compacté et délimité par des faces latérales. Elles se présentent sous la forme de petits cubes dont les dimensions sont de l'ordre de 3 à 5 cm.

Les plants se développent dans les mottes à partir d'une graine qui a été disposée au coeur de ladite motte et, selon la nature des plants et aussi les conditions dans lesquelles ils se sont développés, il peut y avoir entre les mottes et surtout entre les mottes d'un même groupe, des adhérences et même une certaine cohésion due à la présence de radicelles qui traversent les parois jointives et se développent dans la ou les mottes adjacentes.

Ces adhérences et cohésions sont une source d'incidents sur les planteuses et provoquent des ratés de séparation.

D'autres causes d'incidents proviennent de l'état des mottes au moment de la plantation et en particulier de leur dureté car elles peuvent être sèches ou humides, voire très humides.

La présente invention propose des moyens qui permettent de diminuer les risques d'incidents et surtout de ratés provenant des causes rappelées ci-dessus, lesquels moyens consistent en une opération préalable, automatique, qui a pour effet de séparer physiquement les mottes en supprimant d'abord tout ou partie des adhérences et surtout en brisant les liaisons du genre radicelles.

Pour résoudre le problème, l'invention propose un procédé comme il est caractérisé dans la revendications 1 ainsi qu'un dispositif comportant les caractéristiques de la revendication 3.

Le procédé selon l'invention consiste en effet - à saisir et maintenir les mottes, de part et d'autre des parois adjacentes où il est prévu d'effectuer la séparation, puis - à imprimer un mouvement de torsion relatif entre lesdites mottes adjacentes, d'une amplitude suffisante pour réaliser une fracture et supprimer tout ou partie des adhérences et autres qui se situent au niveau desdites parois adjacentes, et ensuite - à écarter lesdites mottes l'une par rapport à l'autre afin de parachever la séparation.

Toujours selon l'invention, le procédé consiste à imprimer le mouvement de torsion oscillant autour d'un axe fixe qui est perpendiculaire à la surface du couloir sur laquelle reposent les mottes, l'une des mottes étant maintenue fixe sur ladite surface et dans le couloir par pincement sur ses flancs, l'autre motte étant également maintenue sur ses flancs par pincement par le dispositif approprié susceptible d'imprimer ledit mouvement de torsion oscillant.

L'invention concerne également le dispositif de mise en oeuvre du procédé de séparation, lequel dispositif comprend, entre le couloir d'amenée des mottes et groupes de mottes et le système de mise en terre, des moyens de prise en charge de la première motte retenue par l'intermédiaire d'une butée escamotable à l'extrémité aval dudit couloir, lesquels moyens de prise en charge sont dotés d'une capacité de mouvement qui permet d'imprimer à ladite première motte un mouvement de torsion oscillant par rapport à la deuxième motte qui est retenue à l'extrémité dudit couloir.

Selon une autre disposition de l'invention, les moyens de prise en charge consistent en une sorte d'étrier, lequel étrier est monté sur un axe et il est mobile sur cet axe, manoeuvré par un organe approprié à mouvement alternatif du genre vérin ou autre pour réaliser le mouvement de torsion de la première motte par rapport à la deuxième motte.

Selon l'invention, le mouvement de torsion de la première motte, autour de l'axe d'articulation de l'étrier, est un mouvement oscillant qui s'effectue sur un angle qui est de l'ordre de 15° environ.

Toujours selon l'invention, les moyens de prise en charge sont également dotés d'une autre capacité de mouvement, supplémentaire, qui consiste à déplacer la première motte entre l'extrémité du couloir d'amenée et un tapis intermédiaire de transfert qui alimente le système de mise en terre, lequel déplacement permet aussi, pour certains types de plants, d'effectuer une opération de séparation et/ou démêlage des limbes ou feuilles entremêlés.

Selon une autre disposition de l'invention, l'axe support de l'étrier est monté sur un bâti mobile qui déplace le système de pinces entre la position de prise en charge de la première motte, à l'extrémité dudit couloir d'amenée, et la position de dépose et de libération de ladite première motte sur le tapis intermédiaire, lequel déplacement de la première motte s'effectue au-dessus d'une plate-forme réalisée en tôle, solidaire du châssis général de la machine, laquelle plate-forme s'étend entre l'extrémité du tapis convoyeur d'amenée et l'entrée dudit tapis intermédiaire.

Selon une première possibilité de l'invention, le bâti support du système de pinces se présente sous la forme d'un chariot, lequel chariot est mobile sur des glissières selon l'axe d'avancement des mottes, sous l'effet d'un organe de manoeuvre approprié du genre vérin par exemple, lequel chariot fait glisser la motte prise dans le système de pinces, sur la plate-forme jusqu'à l'entrée du tapis intermédiaire, lequel tapis intermédiaire prend en charge ladite motte dès qu'elle est libérée du système de pinces.

Selon une variante de réalisation, le bâti support du système de pinces est monté basculant autour d'un axe transversal, perpendiculaire à l'axe d'avancement des mottes, lequel bâti est mobile sous l'effet d'un organe de manoeuvre approprié du genre vérin et imprime au système de pinces et à la motte prise entre les pinces, un mouvement selon un arc de cercle entre la position de prise en charge de la première motte à l'extrémité du couloir d'amenée et la position de décharge de ladite première motte sur l'entrée du tapis intermédiaire, laquelle motte balaye la plate-forme qui se présente elle aussi en forme d'arc de cercle.

Selon une autre disposition de l'invention, le tapis intermédiaire est un tapis sans fin comportant des aménagements sous forme de compartiments qui permettent de déplacer les mottes et de les présenter au système de mise en terre de façon synchronisée. Ce tapis intermédiaire compartimenté permet, pour certains types de plants, de parachever le démêlage des feuilles.

L'invention concerne également la machine équipée d'un tel dispositif de mise en oeuvre du procédé, laquelle machine comporte un automate qui coordonne, à partir du mouvement du système de mise en terre et/ou du mouvement du tapis intermédiaire dont la vitesse de chacun est fonction de la vitesse de déplacement de la machine, l'ensemble des vérins de manoeuvre c'est-à-dire :
- le vérin de serrage et de retenue des mottes à partir de la deuxième, à l'extrémité du couloir d'amenée ;
- le vérin de manoeuvre de la butée d'arrêt de la première motte en bout du couloir d'amenée ;
- les vérins montés sur l'étrier formant pinces ;
- le vérin de manoeuvre de l'étrier pour réaliser le mouvement de torsion de la première motte ;
- le vérin de manoeuvre du chariot qui porte l'étrier.

L'invention sera encore détaillée à l'aide de la description suivante et des dessins annexés, donnés à titre indicatif, et dans lesquels :
- la figure 1 représente des mottes et groupes de mottes qui permettent le développement de toutes sortes de plants comme des plants de salades, des plants de céleri, etc ... ;
- la figure 2 est une vue schématique de dessus des différents éléments constitutifs d'une machine de plantation selon l'invention, comportant le dispositif de mise en oeuvre du procédé de séparation selon l'invention ;
- la figure 3 représente les différentes étapes du procédé selon un mode de réalisation de l'invention décomposé en plusieurs étapes : a, b, c, d, e et f ;
- la figure 4 représente, vu de côté sous forme de schéma fonctionnel, le dispositif de mise en oeuvre de l'invention, intégré dans une machine de plantation ;
- la figure 5 représente, schématiquement et en perspective, le dispositif de mise en oeuvre du procédé selon l'invention ;
- la figure 6 représente, schématiquement et en perspective, le dispositif de mise en oeuvre du procédé selon une variante de réalisation ;
- la figure 7 est une élévation schématique du dispositif représenté figure 6.

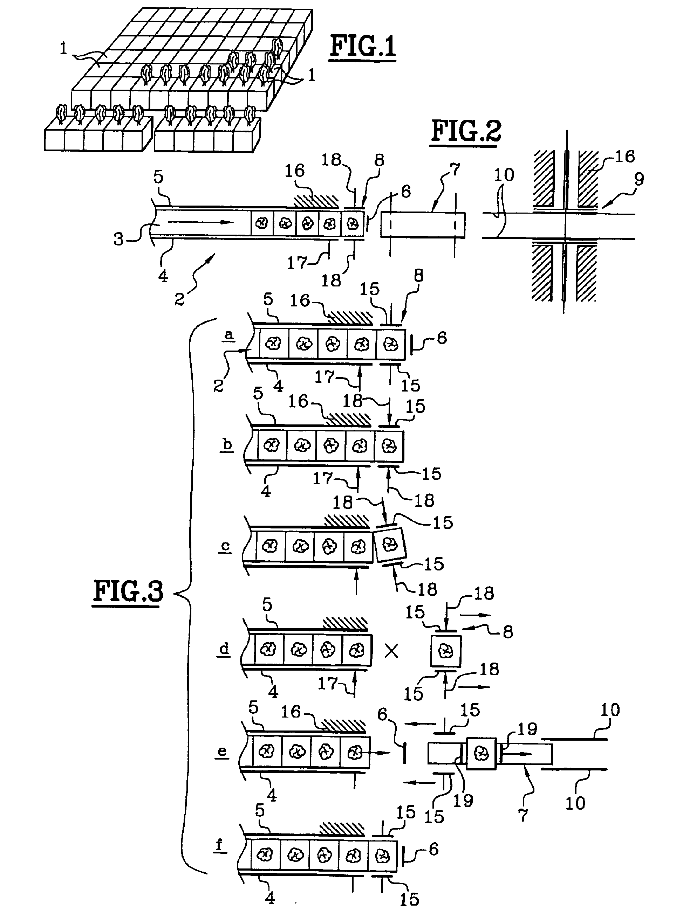

La figure 1 montre les mottes cubiques 1, constituées de terreau, dans lesquelles poussent les plants de salades, céleri ou autres. Ces mottes sont façonnées et disposées sur des plateaux, non représentés, séparées les unes des autres lors de leur façonnage formant toutefois, comme représenté figure 1, des groupes de mottes en forme de blocs linéaires, lesquels blocs comportent par exemple cinq ou dix mottes juxtaposées.

Ces groupes de mottes permettent à l'opérateur de saisir simultanément plusieurs mottes pour alimenter la machine de plantation.

Les principaux organes de cette machine de plantation sont représentés schématiquement, figure 2, vus de dessus. Les mottes ou groupes de mottes sont disposés dans un couloir d'amenée 2 qui comprend un tapis sans fin 3 et des parois latérales 4 et 5. A l'extrémité du couloir on trouve une butée 6 escamotable qui arrête la première motte du groupe, et, au-delà de cette butée, un tapis 7 qui emmène les mottes. Ces mottes sont en fait prises en charge par un système de pinces 8 qui se situent à l'extrémité du couloir 2, entre les extrémités des parois 4 et 5 et la butée 6. Le système de pinces transfère la première motte sur le tapis 7, lequel tapis emmène les mottes vers un système de mise en terre 9 constitué de pinces rayonnantes 10 qui déposent chaque motte, sur le sol, à une vitesse nulle par rapport au sol.

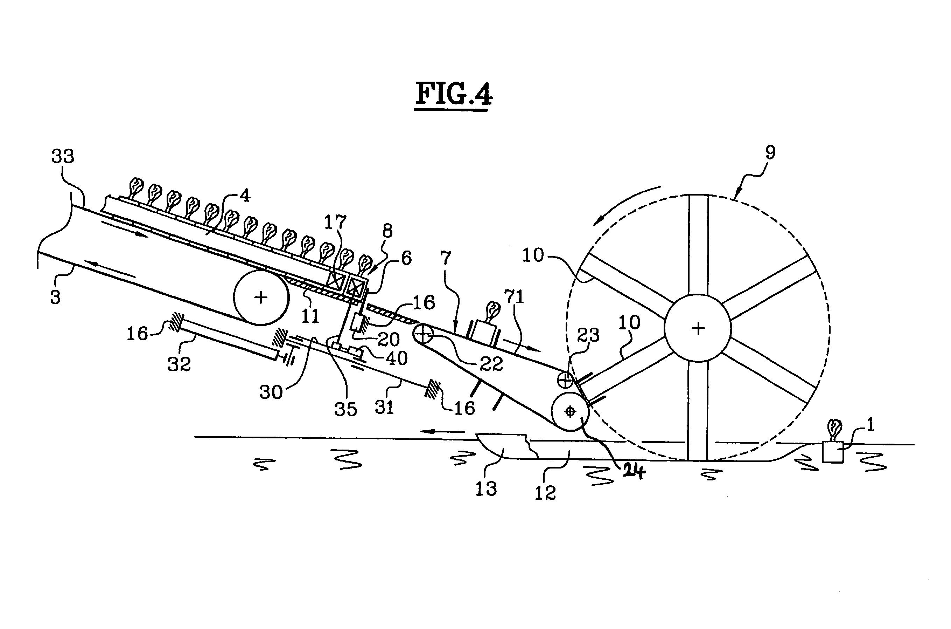

Ces différents éléments constitutifs se retrouvent aussi à la figure 4, selon une élévation schématique. C'est ainsi que l'on retrouve le tapis convoyeur 3 du couloir d'amenée 2, le tapis 7, le système de mise en terre 9 et le système de pinces 8 qui sera détaillé plus loin. Entre les tapis 3 et 7, les mottes sont guidées sur une plate-forme 11 constituée d'une plaque de tôle solidaire du châssis de la machine.

Les mottes 1 sont déposées une à une dans un sillon 12 qui est creusé par un soc 13, au fur et à mesure de l'avancement de la machine. Les mottes 1 sont déposées dans le sillon 12 par les pinces 10, lesquelles pinces prennent en charge chaque motte qui est transférée au moyen du tapis intermédiaire 7. Sur les planteuses traditionnelles, les mottes peuvent, par exemple, être prises en charge directement par les pinces rayonnantes 10, à la sortie du couloir 2.

Cependant, comme signalé précédemment, pour certains types de plants, comme des plants de céleri par exemple, les radicelles sont parfois tellement entremêlées, d'une motte à l'autre, que la séparation au moyen des pinces est aléatoire.

La figure 3 illustre, par une suite d'opérations repérées de a à f, les différentes phases du procédé qui permet de séparer efficacement les mottes les unes par rapport aux autres et en particulier comme illustré figure 3a, la première motte qui est située à l'extrémité aval du couloir 2, retenue par la butée 6 et située dans le système de pinces 8, par rapport à la deuxième motte qui est retenue dans ledit couloir 2 au moyen des extrémités des parois latérales 4 et 5.

Le système de pinces 8 comporte des pinces 15 en forme de plaque carrée par exemple, qui enserrent les faces latérales libres de la première motte.

La deuxième motte est pincée entre l'extrémité de la paroi latérale 5 qui est par exemple fixe, solidaire du châssis général 16 de la machine, et l'extrémité de la paroi latérale 4 qui est mobile, sous l'effet d'un vérin 17.

La figure 3b montre que la première motte est retenue et prise en charge au moyen des pinces 15 qui sont actionnées par des vérins 18.

La deuxième motte et les mottes qui suivent sont toujours retenues à l'extrémité du couloir 2, pincées entre les parois 4 et 5 et en particulier par l'extrémité de la paroi 4, au moyen du vérin 17 qui déforme l'extrémité de ladite paroi. Cette paroi 4 se présente sous la forme d'une lamelle élastique qui est déformable sur la longueur de deux mottes par exemple.

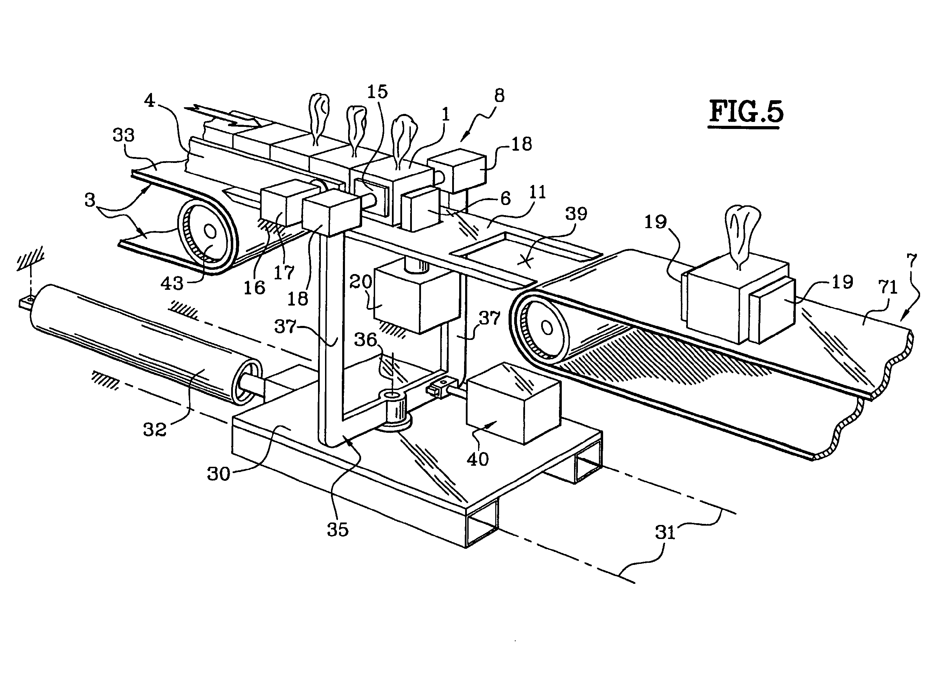

Le système de pinces 8 est détaillé plus loin en liaison avec la figure 5 et comporte deux vérins 18 qui permettent de serrer la première motte.

La figure 3c montre le mouvement de la première motte, imprimé par le système de pinces 8, lequel mouvement permet de briser tout ou partie des adhésions entre la première et la deuxième motte, laquelle deuxième motte est retenue à l'extrémité du couloir 2, pincée entre les parois 4 et 5.

Ce mouvement consiste en une rotation limitée de la première motte autour d'un axe qui correspond à l'axe de la plantation effectuée dans ladite première motte c'est-à-dire un axe perpendiculaire à la surface de la plate-forme 11 qui constitue le fond du couloir 2. Cette rotation s'effectue selon un mouvement rapide aller et retour, sur un angle qui est par exemple de l'ordre de 15°.

A la suite de ce mouvement d'oscillation qui permet de séparer totalement ou partiellement les mottes, on remarque, représenté figure 3d, un mouvement d'éloignement de la première motte par rapport à la deuxième motte, toujours sous l'effet du système de pinces 8 qui se déplace dans le prolongement du couloir 2, lequel système de pinces dépose, comme représenté figure 3e, la première motte, sur le tapis 7, lequel tapis consiste en un tapis sans fin muni de cloisons 19 érigées en saillie sur sa surface externe, lesquelles cloisons 19 forment une sorte de compartiment qui véhicule la motte et permet un déplacement précis de cette dernière vers le système de plantation 9, avec une mise en correspondance de ladite motte et des pinces rayonnantes 10, par un mouvement synchronisé.

Dès que la motte a été prise en charge par le tapis intermédiaire 7, les pinces 15 libèrent ladite motte et le système de pinces retourne à la case départ, à l'extrémité du couloir 2, pour prendre en charge la nouvelle première motte. On remarque, toujours figure 3e, la remise en position active de la butée 6 qui se situe à l'extrémité du couloir d'amenée 2. La figure 3f montre la mise en place de la nouvelle première motte dans le système de pinces 15, laquelle première motte est arrêtée par la butée 6, l'ensemble des mottes étant poussé vers ladite butée au moyen du tapis 3 qui est en mouvement d'une façon permanente.

Lorsque la première motte est en place dans les pinces 15, les vérins 17 et 18 sont remis en activité pour, d'une part, grâce au vérin 17, pincer la deuxième motte et retenir les mottes à partir de la deuxième dans le couloir d'amenée 2 et, d'autre part, grâce aux vérins 18, pincer la première motte qui est située dans les pinces 15 ; ensuite 1 a butée 6 est escamotée.

La figure 4 montre, sous forme d'une élévation schématique, les différents éléments constitutifs de la machine.

Ainsi on retrouve le tapis sans fin 3 sur lequel sont déposées les mottes. Ces mottes sont guidées latéralement au moyen des parois 4 et 5 ; seule la paroi 4 est visible figure 4, munie, à son extrémité, du vérin 17.

Le système de pinces 8 apparaît également en relation avec la première motte, laquelle première motte est retenue au moyen de la butée 6, laquelle butée est actionnée au moyen d'un vérin 20 qui est solidaire du châssis 16 par l'intermédiaire de la plate-forme 11.

Entre le tapis d'amenée 3 et le tapis intermédiaire 7, on trouve cette plate-forme 11 qui sert d'intermédiaire et de surface de glissement pour les mottes.

La butée 6 se présente sous la forme d'un doigt qui, en position active, s'étend en saillie au-dessus de la plate-forme 11. Ce doigt formant la butée 6, se déplace selon un axe perpendiculaire à la plate-forme 11.

Le tapis intermédiaire 7 est guidé entre plusieurs poulies et en particulier entre deux poulies 22 et 23 qui permettent de maintenir le brin 71 du tapis dans le prolongement de la plate-forme 11, puis entre la poulie 23 et une poulie motrice 24 qui permettent de former un brin tangent à la circonférence engendrée par l'extrémité des pinces rayonnantes 10 de façon à présenter la motte, auxdites pinces, dans une position appropriée pour sa mise en terre.

Le système de pinces 8 est représenté figure 4, dans la position de prise en charge de la première motte. Il est mobile entre cette position de prise en charge à l'extrémité du couloir 2 et une position de déchargement, à l'entrée du tapis intermédiaire 7. Ce système de pinces est monté sur un bâti 30 qui est guidé sur des glissières 31 solidaires du châssis 16 ; ce bâti 30 est mobile sous l'effet d'un vérin 32 fixé au châssis 16.

Les glissières 31 s'étendent sous la plate-forme 11, de l'extrémité du couloir 2 jusqu'à l'entrée du tapis intermédiaire 7. Elles sont parallèles à la surface supérieure 33 du tapis 3, à la plate-forme 11 et au brin 71 du tapis 7.

Comme représenté d'une façon plus détaillée figure 5, le système de pinces consiste en fait en un support 35 en forme d'étrier qui s'étend au-dessus du bâti 30, monté sur un axe 36 perpendiculaire aux glissières 31. Cet étrier support comporte, à l'extrémité supérieure de ses branches 37, les vérins 18 qui actionnent les pinces 15, lesquelles pinces sont en contact avec les faces latérales de la première motte 1.

L'axe 36 se situe dans le plan vertical médian du couloir 2 et il passe par le coeur de la motte qui est prise en charge par le système de pinces.

L'étrier est mobile autour de l'axe 36 sous l'effet d'un vérin 40 monté sur le bâti 30, lequel vérin imprime un mouvement de pivotement aller et retour de l'étrier 35 autour de l'axe 36 avec une amplitude angulaire de l'ordre de 15°. Ce mouvement d'oscillation, reporté au niveau des pinces 15, provoque une torsion et une fracture entre la première et la deuxième motte, ce qui permet de séparer ladite première motte prise entre les pinces 15, de la motte suivante retenue à l'extrémité du couloir 2. Cette opération de séparation des première et seconde mottes s'effectue après escamotage de la butée 6.

Dès que le mouvement d'oscillation a été initié, la première motte est entraînée vers le tapis intermédiaire 7 par le déplacement du bâti 30 sous l'effet du vérin 32.

Le tapis intermédiaire 7 comporte, comme mentionné précédemment, des cloisons 19 qui s'étendent en saillie de façon à former un compartiment de calage pour encadrer la motte et la déplacer selon un mouvement qui est synchronisé avec le mouvement des pinces rayonnantes 10.

On remarque, sur la plate-forme 11, une ouverture 39 face à l'extrémité amont du tapis intermédiaire 7 pour permettre le passage des cloisons 19 qui enserrent la motte amenée par le système de pinces 8.

Toujours figure 5, on remarque la paroi latérale 4 dont l'extrémité est mobile sous l'effet du vérin 17, lequel vérin 17 est monté sur le châssis 16 de la machine.

Les mottes sont amenées par le tapis 3 et, à l'extrémité de ce tapis 3, en aval du rouleau 43, les mottes prennent place sur la plate-forme 11 qui prolonge le brin supérieur 33 dudit tapis 3.

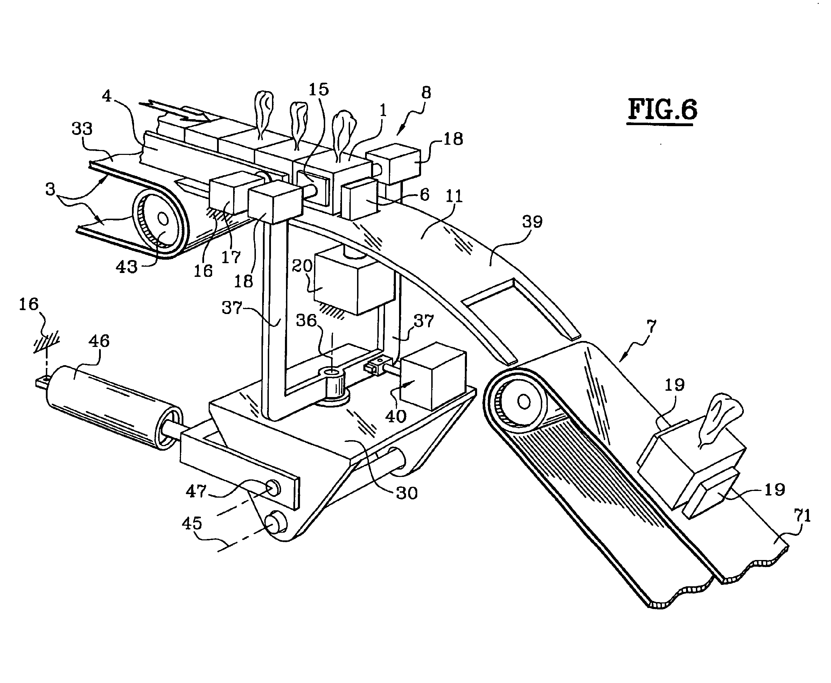

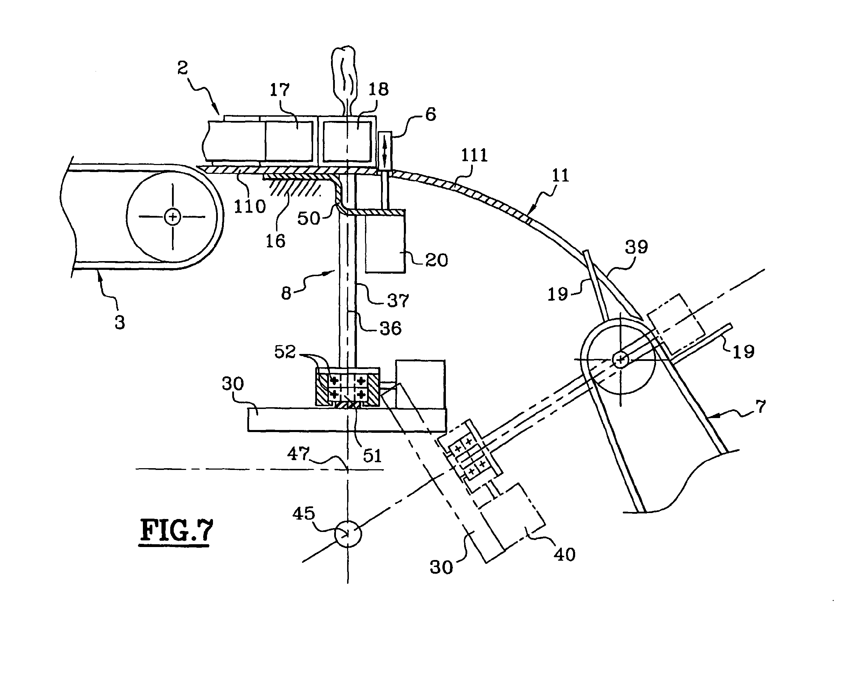

Les figures 6 et 7 montrent une variante de réalisation dans laquelle les repères ont été conservés pour les pièces conservant la même fonction.

Comme représenté figure 6, le bâti 30 est mobile, articulé sur un axe 45 qui est horizontal, et transversal et perpendiculaire au sens d'avancement des mottes. En fait cet axe 45 est perpendiculaire et sécant avec l'axe 36 qui permet le pivotement de l'étrier 37 ; il se situe sous l'étrier 37.

La manoeuvre du bâti 30 autour de cet axe 45 s'effectue par le biais d'un vérin 46 interposé entre le châssis 16 et un axe 47 solidaire du bâti 30.

Compte-tenu du mouvement du système de pinces 8, qui fait décrire à la première motte 1 un arc de cercle autour de l'axe 45, la plate-forme 11 est conformée également en arc de cercle et s'étend jusqu'au tapis intermédiaire 7.

Le brin supérieur 71 du tapis intermédiaire 7 s'étend dans le prolongement de l'extrémité aval de la plate-forme 11.

Dans cette configuration, le tapis transporteur 3 qui amène les mottes vers le système de pinces peut avoir une inclinaison moins importante que celle représentée figure 4. En revanche, le brin supérieur 71 du tapis 7 peut avoir une inclinaison plus importante.

La figure 7 montre d'une façon plus détaillée sous forme d'élévation, la plate-forme 11 qui s'étend entre le tambour d'extrémité 43 du tapis d'amenée 3 et le tambour d'extrémité 22 du tapis 7.

Cette plate-forme 11 comporte tout d'abord une partie rectiligne 110 qui s'étend entre le tapis 3 et la position de la première motte lorsqu'elle est prise en charge, puis un secteur 111 en forme d'arc de cercle centré sur l'axe 45 autour duquel basculent le bâti 30 et le système de pinces 8.

Sur la figure 7, on trouve le système de pinces 8 représenté d'une part, en position de prise en charge de la première motte à l'extrémité du couloir d'amenée 2 et, d'autre part, en position de déchargement de la première motte à l'entrée du tapis 7.

L'angle de basculement d'une position à l'autre autour de l'axe 45 est de l'ordre de 30° à 60° environ.

Toujours figure 7, on remarque que la butée 6 s'étend en saillie au-dessus de la plate-forme 11 et en particulier du secteur 111. Cette butée 6 est manoeuvrée par le vérin 20 qui se situe sous la plate-forme 11, lequel vérin est solidaire de ladite plate-forme par une patte 50, laquelle plate-forme est elle-même solidaire du châssis 16.

Le mouvement de pivotement et de basculement du système de pinces 8 autour de l'axe 36, s'effectue comme dans le mode de réalisation précédent, au moyen d'un vérin 40 qui est associé au bâti 30.

Ce système de pinces 8 et en particulier l'étrier 37 est par exemple monté sur un axe 51 solidaire du bâti 30 par l'intermédiaire de roulements 52 simplement schématisés figure 7.

Toujours figure 7, on remarque l'orifice 39 aménagé dans la plate-forme 11 et en particulier dans la partie 111 ; cet orifice 39 permet le passage des cloisons 19 du tapis intermédiaire 7.

La motte est déposée entre deux cloisons 19 et on remarque, figure 7, que la motte est déposée derrière une cloison 19 qui s'étend perpendiculairement au brin 71 du tapis 7 alors que la cloison suivante est encore pratiquement en position perpendiculaire à la première cloison, sous la plate-forme 11.

La machine de plantation comporte de préférence un automate pour commander et coordonner les différents mouvements des vérins de manoeuvre, c'est-à-dire : le vérin 17 à l'extrémité du couloir 4, les vérins 18 d'actionnement des pinces 15, le vérin 20 de la butée 6, le vérin 32 de manoeuvre du bâti 30 et le vérin 40 de pivotement du système de pinces 8. Ces différents vérins sont de préférence des vérins à fonctionnement pneumatique. La coordination des mouvements s'effectue en prenant comme référence le mouvement du système de mise en terre et/ou celui du tapis intermédiaire 7 dont la vitesse de chacun est fonction de la vitesse d'avancement de la machine sur le sol.

## Revendications

1. Procédé de séparation de mottes cubiques qui sont disposées en rangs dans un couloir et amenées vers un système de mise en terre, en particulier pour la séparation entre les parois adjacentes de la première motte située à l'extrémité du rang et de la deuxième motte, **caractérisé en ce qu'**il consiste :
- à maintenir fixe ladite deuxième motte dans le couloir par pincement sur ses flancs, et, pendant ce maintien fixe,
- à saisir ladite première motte par pincement sur ses flancs au moyen d'un dispositif susceptible d'imprimer un mouvement de torsion oscillant relatif entre lesdites première et deuxième mottes à séparer, ledit mouvement de torsion oscillant correspondant à un mouvement de pivotement aller-retour,
- à actionner ledit dispositif pour imprimer ledit mouvement de torsion oscillant relatif entre lesdites mottes adjacentes à séparer, afin de supprimer tout ou partie des adhérences et autres qui se situent au niveau desdites parois adjacentes, et ensuite
- à écarter ladite première motte pour parachever la séparation.

2. Procédé selon la revendication 1, **caractérisé en ce qu'**il consiste à imprimer ledit mouvement de torsion oscillant autour d'un axe qui est perpendiculaire à la surface sur laquelle reposent les mottes à séparer.

3. Dispositif de mise en oeuvre du procédé de séparation de mottes selon l'une quelconque des revendications 1 ou 2, comprenant un couloir (2) de réception d'un rang de mottes cubiques dont la sole est équipée d'une butée escamotable (6) au niveau de son extrémité aval, adaptée pour retenir la première motte du rang de mottes, **caractérisé en ce qu'**il comprend :
- des moyens (4, 5, 17) pour retenir la deuxième motte par pincement sur ses flancs, et
- des moyens (15, 18, 35) adaptés pour prendre en charge ladite première motte retenue par ladite butée (6), lesquels moyens (15, 18, 35) sont aptes à pincer les flancs de ladite première motte et à imprimer à cette dernière un mouvement de torsion oscillant par rapport à ladite deuxième motte, correspondant à un mouvement de pivotement aller-retour.

4. Dispositif selon la revendication 3, **caractérisé en ce que** les moyens de prise en charge de la première motte consistent en une sorte d'étrier (35) muni à l'extrémité de ses branches, de vérins (18) qui manoeuvrent les pinces (15) servant à la prise en charge de la première motte, lequel étrier est monté sur un axe (36) et il est mobile sur cet axe, manoeuvré par un organe approprié du genre vérin (40) ou autre, pour réaliser le mouvement de torsion de la première motte par rapport à la deuxième motte.

5. Dispositif selon la revendication 4, **caractérisé en ce que** le mouvement de torsion de la première motte autour de l'axe d'articulation (36) de l'étrier, est un mouvement oscillant qui s'effectue sur un angle qui est de l'ordre de 15°.

6. Dispositif selon l'une quelconque des revendications 4 ou 5, **caractérisé en ce que** les moyens (15, 18, 35) de prise en charge de la première motte permettent également d'assurer le déplacement de ladite première motte entre l'extrémité du couloir d'amenée et un tapis intermédiaire (7), lequel tapis (7) permet de transférer ladite première motte vers le système de mise en terre.

7. Dispositif selon l'une quelconque des revendications 5 ou 6, **caractérisé en ce que** l'axe (36) supportant l'étrier (35) est monté sur un bâti (30) mobile, lequel bâti déplace le système de pinces (8) entre la position de prise en charge de la première motte, à l'extrémité du couloir d'amenée (2), et la position de dépose et de libération de ladite première motte, sur le tapis intermédiaire (7), lequel déplacement de la première motte s'effectue au-dessus d'une plate-forme (11) en forme de plaque qui s'étend entre l'extrémité du tapis convoyeur (3) et l'entrée dudit tapis intermédiaire (7).

8. Dispositif selon la revendication 7, **caractérisé en ce que** le bâti (30) se présente sous la forme d'un chariot mobile sur des glissières (31), selon l'axe d'avancement des mottes, sous l'effet d'un organe de manoeuvre.

9. Dispositif selon la revendication 7, **caractérisé en ce que** le bâti (30) est monté basculant autour d'un axe (45) transversal perpendiculaire à l'axe d'avancement des mottes, lequel bâti est mobile sous l'effet d'un organe de manoeuvre approprié.

10. Dispositif selon la revendication 7, **caractérisé en ce que** le tapis intermédiaire (7) est un tapis sans fin comportant des cloisons (19) qui forment des compartiments pour accueillir et déplacer les mottes, et les présenter au système de mise en terre de façon synchronisée.

11. Machine de plantation de mottes comportant un dispositif selon l'une quelconque des revendications 6 à 10, **caractérisée en ce qu'**elle comporte un automate qui coordonne, à partir du mouvement du système de mise en terre et/ou du mouvement du tapis intermédiaire (7), l'ensemble des vérins de manoeuvre c'est-à-dire :- le vérin (17) servant au serrage et à la retenue des mottes à partir de la deuxième, à l'extrémité du couloir d'amenée (2), - le vérin (20) de manoeuvre de la butée d'arrêt (6) de la première motte en bout du couloir d'amenée, - les vérins (18) montés sur l'étrier pour manoeuvrer les pinces (15), - le vérin (40) permettant de manoeuvrer l'étrier (35) autour de l'axe (36) pour réaliser le mouvement de torsion oscillant de la première motte, - le vérin (32) de manoeuvre du chariot (30) qui porte l'étrier.

## Claims

1. A method for separating cubic soil blocks arranged in rows along a chute and supplied to a planting system, in particular for separating the adjacent faces of the first soil block located at the end of the row and of the second soil block, **characterized in that** it consists in:
- maintaining said second soil block in a fixed position in the chute by clamping its sides, and, while such soil block is being maintained:
- gripping said first soil block by clamping its sides by means of a device capable to impart a relative oscillating twisting movement between said first and second soil blocks to be separated, said oscillating twisting movement corresponding to a reciprocating pivoting movement,
- actuating said device to impart said relative oscillating twisting movement between said adjacent soil blocks to be separated, so as to suppress all or part of the adhesions or the like which are located at said adjacent faces, and then
- moving said first soil block apart to complete the separation.

2. The method according to claim 1, **characterized in that** it consists in imparting said oscillating twisting movement around an axis that is perpendicular to the surface on which rest the soil blocks to be separated.

3. A device for implementing the method for separating soil blocks according to any one of claims 1 or 2, comprising a chute (2) for receiving a row of cubic soil blocks, the floor of which is provided, at its downstream end, with a retractable stop (6) adapted to retain the first one of the row of soil blocks, **characterized in that** it comprises:
- means (4, 5, 17) for retaining the second soil block by clamping its sides, and
- means (15, 18, 35) adapted to pick-up said first soil block retained by said stop (6), which means (15, 18, 35) are adapted to clamp the sides of said first soil block and to impart to the latter an oscillating twisting movement relative to said second soil block, this movement corresponding to a reciprocating pivoting movement.

4. The device according to claim 3, **characterized in that** the means for picking-up the first soil block consist of a sort of stirrup (35) provided, at the end of its legs, with jacks (18) that operate the clamps (15) for picking-up the first soil block, said stirrup is mounted on an axis (36) and is movable on this axis, as operated by a suitable member (40) of the jack type or the like, to produce the twisting movement of the first soil block relative to the second soil block.

5. The device according to claim 4, **characterized in that** the twisting movement of the first soil block around the articulation axis (36) of the stirrup is an oscillating movement that covers an angle of the order of 15°.

6. The device according to any one of claims 4 or 5, **characterized in that** the means (15, 18, 35) for picking-up the first soil block also serve to ensure the displacement of said first soil block between the end of the supplying chute and an intermediate conveyor belt (7), which conveyor belt (7) serves to transfer said first soil block to the planting system.

7. The device according to any one of claims 5 or 6, **characterized in that** the axis (36) supporting the stirrup (35) is mounted onto a movable frame (30), which frame moves the system of clamps (8) between the position where the first soil block is picked-up, at the end of the supplying chute (2), and the position where said first soil block is dropped and released onto the intermediate conveyor belt (7), which displacement of the first soil block is made above a platform (11) in the form of a plate extending between the end of the conveyor belt (3) and the entrance of said intermediate conveyor belt (7).

8. The device according to claim 7, **characterized in that** the frame (30) is in the form of a carriage movable on sliding rails (31), along the soil block transporting axis, under the control of an operating member.

9. The device according to claim 7, **characterized in that** the frame (30) is swivellingly mounted around a transverse axis (45) perpendicular to the soil block transporting axis, which frame is movable under the control of a suitable operating member.

10. The device according to claim 7, **characterized in that** the intermediate conveyor belt (7) is an endless belt comprising partitions (19) that form compartments for receiving and displacing the soil blocks, and for presenting synchronously the latter to the planting system.

11. A machine for planting soil blocks, comprising a device according to any one of claims 6 to 10, **characterized in that** it comprises an automatic controller which coordinates, based on the movement of the planting system and/or the movement of the intermediate conveyor belt (7), the whole of the operating jacks, namely: - the jack (17) for tightening and retaining the soil blocks, from the second one, at the end of the supplying chute (2), - the jack (20) for operating the stop (6) for arresting the first soil block at the outlet of the supplying chute, - the jacks (18) mounted on the stirrup to operate the clamps (15), - the jack (40) serving to operate the stirrup (35) around the axis (36) to produce the oscillating twisting movement of the first soil block, - the jack (32) for operating the carriage (30) that supports the stirrup.

## Patentansprüche

1. Verfahren zum Trennen eckiger Soden, die in Reihen in einem Gang angeordnet und zu einem Einpflanzsystem gebracht werden, insbesondere zum Trennen zwischen den nebeneinander liegenden Wänden der ersten Sode, die sich am Ende der Reihe und der zweiten Sode befindet, **dadurch gekennzeichnet, dass** es aus Folgendem besteht:
- die zweite Sode in dem Gang durch Klemmen auf ihren Flanken stationär halten, und während dieses Stationärhaltens,
- Erfassen der ersten Sode durch Klemmen auf ihren Flanken mittels einer Vorrichtung, die eine relative schwingende Torsionsbewegung zwischen der ersten und der zweiten zu trennenden Sode auferlegen kann, wobei die schwingende Torsionsbewegung einer Hin-Zurück-Schwenkbewegung entspricht,
- Betätigen der Vorrichtung, um die relative schwingende Torsionsbewegung zwischen den nebeneinander liegenden, zu trennenden Soden aufzuerlegen, um Haftungen ganz oder teilweise und weitere, die auf dem Niveau der nebeneinander liegenden Wände liegen, zu beseitigen und danach
- Abspreizen der ersten Sode, um das Trennen zu vervollständigen.

2. Verfahren nach Anspruch 1, **dadurch gekennzeichnet, dass** es darin besteht, die schwingende Torsionsbewegung um eine Achse aufzuerlegen, die senkrecht zu der Oberfläche, auf der die zu trennenden Soden ruhen, ist.

3. Vorrichtung zum Umsetzen des Verfahrens zum Trennen von Soden nach einem der Ansprüche 1 oder 2, die einen Gang (2) zum Empfangen einer Reihe eckiger Soden aufweist, dessen Sohle mit einem einziehbaren Anschlag (6) auf dem Niveau seines stromaufwärtigen Endes, der die erste Sode der Sodenreihe zurückhalten kann, ausgestattet ist, **dadurch gekennzeichnet, dass** sie Folgendes aufweist:
- Mittel (4, 5, 17), um die zweite Sode durch Klemmen auf ihren Flanken zurückzuhalten und
- Mittel (15, 18, 35), die die erste von dem Anschlag (6) zurückgehaltene Sode übernehmen können, wobei die Mittel (15, 18, 35) die Flanken der ersten Sode einklemmen und dieser Letzteren eine schwingende Torsionsbewegung in Bezug zu der zweiten Sode auferlegen können, die einer Hin-Zurück-Schwenkbewegung entspricht.

4. Vorrichtung nach Anspruch 3, **dadurch gekennzeichnet, dass** die Übernahmemittel der ersten Sode aus einer Art Bügel (35) bestehen, der am Ende seiner Schenkel mit Zylindern (18) versehen ist, die die Zangen (15) handhaben, die zum Übernehmen der ersten Sode dienen, wobei der Bügel auf eine Achse (36) montiert und auf dieser Achse beweglich ist, gehandhabt von einem geeigneten Organ des Typs Zylinder (40) oder dergleichen, um die Torsionsbewegung der ersten Sode in Bezug auf die zweite Sode durchzuführen.

5. Vorrichtung nach Anspruch 4, **dadurch gekennzeichnet, dass** die Torsionsbewegung der ersten Sode um die Anlenkachse (36) des Bügels eine schwingende Bewegung ist, die auf einem Winkel in der Größenordnung von 15° erfolgt.

6. Vorrichtung nach einem der Ansprüche 4 oder 5, **dadurch gekennzeichnet, dass** es die Mittel (15, 18, 35) zum Übernehmen der ersten Sode auch erlauben, das Bewegen dieser ersten Sode zwischen dem Ende des Zuführgangs und einer Zwischenmatte (7) sicherzustellen, wobei die Matte (7) es erlaubt, die erste Sode zu dem Einpflanzsystem zu transferieren.

7. Vorrichtung nach einem der Ansprüche 5 oder 6, **dadurch gekennzeichnet, dass** die Achse (36), die den Bügel (35) trägt, auf ein bewegliches Gestell (30) montiert ist, wobei das Gestell das Zangensystem (8) zwischen der Übernahmeposition der ersten Sode an dem Ende des Zuführgangs (2) und der Ablege- und Freigabeposition der ersten Sode auf der Zwischenmatte (7) bewegt, wobei die Bewegung der ersten Sode oberhalb einer Plattform (11) in Plattenform erfolgt, die sich zwischen dem Ende des Förderbands (3) und dem Eingang der Zwischenmatte (7) erstreckt.

8. Vorrichtung nach Anspruch 7, **dadurch gekennzeichnet, dass** das Gestell (30) die Form eines Wagens aufweist, der auf Gleitschienen (31) entlang der Vorlaufachse der Soden unter der Einwirkung eines Handhabungsorgans beweglich ist.

9. Vorrichtung nach Anspruch 7, **dadurch gekennzeichnet, dass** das Gestell (30) um eine Querachse (45) senkrecht zu der Vorlaufachse der Soden kippend montiert ist, wobei das Gestell unter der Einwirkung eines entsprechenden Handhabungsorgans beweglich ist.

10. Vorrichtung nach Anspruch 7, **dadurch gekennzeichnet, dass** die Zwischenmatte (7) eine Endlosmatte ist, die Wände (19) aufweist, die Fächer bilden, um die Soden aufzunehmen und zu bewegen und sie dem Einpflanzsystem synchronisiert zu präsentieren.

11. Maschine zum Pflanzen von Soden, die eine Vorrichtung nach einem der Ansprüche 6 bis 10 aufweist, **dadurch gekennzeichnet, dass** sie einen Automaten aufweist, der ausgehend von der Bewegung des Einpflanzsystems und/oder der Bewegung der Zwischenmatte (7) die Einheit der Handhabungszylinder koordiniert, nämlich: - den Zylinder (17), der zum Klemmen und Zurückhalten der Soden ab der zweiten Sode dient, am Ende des Zuführgangs (2), - den Handhabungszylinder (20) des Stoppanschlags (6) der ersten Sode am Ende des Zuführgangs, - die Zylinder (18), die auf den Bügel montiert sind, um die Zangen (15) zu handhaben, - den Zylinder (40), der das Handhaben des Bügels (35) um die Achse (36) zum Ausführen der schwingenden Torsionsbewegung der ersten Sode erlaubt, - den Zylinder (32) zum Handhaben des Wagens (30), der den Bügel trägt.
